# NOUVEAU FASCICULE DE BREVET EUROPEEN

(11) **EP 0 649 547 B2**
(45) Date de publication et mention de la décision concernant l'opposition: **08.06.2005**
(45) Mention de la délivrance du brevet: 11.06.1997
(21) Numéro de dépôt: 93914829.2
(22) Date de dépôt: 07.07.1993
(51) Int. Cl.: G06F 13/38, G07F 7/10

(54) **CARTE A MEMOIRE DE MASSE AVEC FONCTION ENTREE/SORTIE**
MASSENSPEICHERKARTE MIT EINGANGS- AUSGANGSFUNKTION.
MASS MEMORY CARD WITH INPUT/OUTPUT FUNCTION

(30) Priorité: 09.07.1992 FR 9208554
(43) Date de publication de la demande: 26.04.1995
(73) Titulaire: GEMPLUS, 13881 Gémenos Cédex (FR)
(72) Inventeur: LE ROUX, Jean-Yves, F-13320 Bouc-Bel-Air (FR)
(86) Numéro de dépôt international: PCT/FR1993/000705
(87) Numéro de publication internationale: WO 1994/001822

(56) Documents cités:
- EP-A- 0 275 510
- EP-A- 0 292 237
- EP-A- 0 383 518
- EP-A- 0 479 655
- WO-A-90/13096
- US-A- 4 686 506

## Description

Les cartes à mémoire de masse amovibles pour microordinateurs (ou ordinateurs personnels ou PC, de l'anglais "personal computer") ont fait leur apparition récemment comme accessoires des ordinateurs personnels, surtout pour les ordinateurs portables. Elles pourraient remplacer dans l'avenir les disquettes et autres moyens de stockage de masse de type magnétique. Elles peuvent servir de mémoire de masse d'aussi grande capacité que les disquettes magnétiques (ordre de grandeur : le million d'octets); leur encombrement n'est pas plus grand (format carte de crédit, épaisseur de 3 à 5 millimètres): elles sont beaucoup plus rapides d'accès (plusieurs milliers de fois plus rapides).

Elles peuvent même servir de mémoire vive de programme directement exécutable par l'ordinateur personnel. Dans ce cas, contrairement aux mémoires de masse magnétiques, elles n'ont pas à être chargées dans la mémoire vive (RAM) du PC pour être exécutées ensuite. Les programmes qu'elle contient sont exécutables directement par l'ordinateur personnel.

Les cartes à mémoire de masse, parfois appelées encore PC-Cards, comportent plusieurs puces de mémoire et un connecteur (connecteur femelle de 68 broches selon la norme PCMCIA de "Personal Computer Memory Card International Association" 1030B East Duane Avenue Sunnyvale, California). La carte est enfichable dans un connecteur correspondant (mâle) de l'ordinateur. Les connexions sont telles que la mémoire puisse être adressée par un port d'entrée-sortie parallèle du PC soit comme si la mémoire était une mémoire de masse magnétique, soit comme si elle était une extension de mémoire vive de l'ordinateur.

Il existe par ailleurs des cartes pour ordinateurs personnels qui ont des fonctions de communication entre l'ordinateur et l'extérieur, et qui comportent donc non seulement un connecteur destiné à assurer la liaison avec l'ordinateur personnel mais aussi des moyens de connexion vers l'extérieur. Ces cartes sont appelées "cartes à fonction Entrée/Sortie" ou "cartes à fonction I/O". L'exemple typique d'une fonction de communication est le modem, qui est raccordé par un premier connecteur à l'ordinateur et par un deuxième connecteur à une ligne téléphonique pour l'envoi de données numériques sur la ligne. Un autre exemple de carte à fonction de communication serait une carte pour réseau en zone rapprochée où la communication avec l'extérieur se fait non pas par un connecteur à contacts matériels mais par transmission hertzienne dans un environnement rapproché.

Les cartes de communication existantes utilisent en général la sortie RS232C des ordinateurs, qui délivre des données numériques sous forme série bien adaptée à la communication par modem ou par radio: ou encore les cartes de communication sont directement montées à l'intérieur de l'ordinateur et ne se présentent pas sous forme de cartes enfichables.

Pour des ordinateurs portables tout spécialement et plus généralement chaque fois qu'on veut économiser de la place, il est préférable que les organes périphériques soient montés de manière enfichable et utilisés seulement lorsqu'on en a besoin.

On pourra par ailleurs se reporter aux documents EP 0 275 510 et WO 90/13096 dans lesquels des cartes à microprocesseur sont utilisées pour des cartes de crédit ainsi qu'au document EP 0 383 518 dans lequel une carte à microprocesseur permet le chargement d'un programme dans une mémoire interne, ce chargement se faisant par l'intermédiaire du microprocesseur de la carte et d'un programme de changement placé dans sa mémoire ROM.

Selon l'invention, on a pensé que le connecteur d'extension de mémoire, présent sur de nombreux ordinateurs, tout particulierement des ordinateurs portables, pouvait être utilisé pour enficher des cartes ayant une fonction de communication quelconque, sans qu'aucun problème de protocole de communication apparaisse du fait de l'utilisation de ce connecteur bien que le connecteur ne soit normalement pas prévu pour cela puisqu'il est normalement prévu pour constituer une extension de mémoire de l'ordinateur.

Pour cela, on propose que la carte qui est destinée à être enfichée dans un ordinateur comporte : les caractéristiques selon les revendications.

Ces données peuvent être les informations elles-mêmes ou des instructions de transfert d'informations comme on le verra plus loin, c'est-à-dire qu'on peut placer dans le fichier d'interface par exemple des 1 ou des 0 (données à échanger), ou encore des instructions de transfert de 1 et des instructions de transfert de 0.

Avec cette structure de carte de communication, on fonctionnera donc en conservant le protocole normal d'échanges de signaux qui est utilisé entre l'ordinateur et les mémoires externes : signaux de lecture/écriture, sélection de puce, bus d'adresse, bus de données, etc. On n'a pas besoin de rajouter des signaux spécifiques destinés à la communication avec l'extérieur comme on devrait le faire normalement.

On utilise donc le standard minimum d'échanges de données avec une mémoire, sans rajouter d'autres signaux spécifiques qui auraient l'inconvénient de dépendre à chaque fois du type de communication envisagé (modem, fax, réseau radio, etc.).

On notera que le fichier d'interface en mémoire volatile ne contient que des données ou instructions de transit et ne nécessite aucune batterie ou pile de sauvegarde; les données qui ont besoin d'être conservées en mémoire (organisation des fichiers, programmes de fonctionnement de la carte) sont en mémoire non volatile (ROM, EPROM, EEPROM, Flash EPROM).

L'invention est décrite plus précisément à propos des cartes à la norme PCMCIA, mais elle peut évidemment être utilisée avec d'autres normes de cartes à mémoire enfichables dans un microordinateur.

On aura compris que l'invention ne propose pas de réaliser une carte de communication dont la seule particularité serait d'avoir un connecteur de même format que celui d'une carte à mémoire PCMCIA; mais l'invention propose de réaliser la carte de telle manière qu'elle puisse être enfichée dans le connecteur PCMCIA qui existe déjà sur l'ordinateur et dont la fonction reste une fonction de connexion vers une mémoire externe.

D'autres caractéristiques et avantages de l'invention apparaîtront à la lecture de la description détaillée qui suit et qui est faite en référence aux dessins annexés dans lesquels :
- la figure 1 représente une vue d'une carte à mémoire au standard PCMCIA;
- la figure 2 représente schématiquement la constitution interne de la carte de communication selon l'invention;

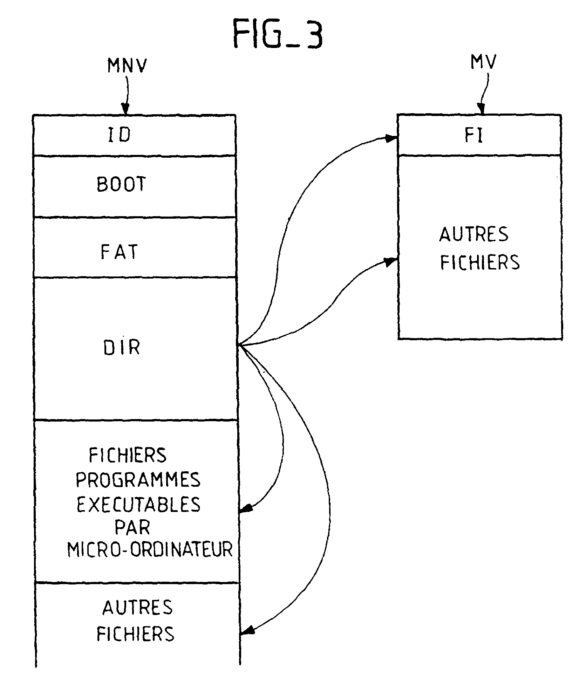

- la figure 3 représente la répartition des fonctions entre la mémoire non volatile et la mémoire volatile de la carte selon l'invention.

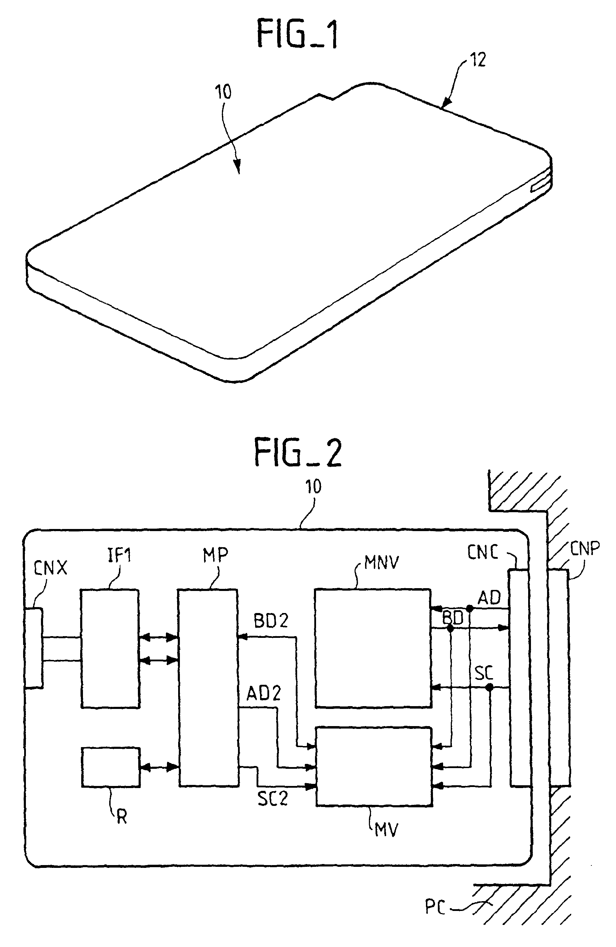

Une carte à mémoire de masse pour microordinateur, au standard PCMCIA, est représentée sous la référence 10 à la figure 1; c'est une carte dont le format est à peu près celui d'une carte de crédit (surface de 5 cm x 8 cm de côté environ), avec une épaisseur plus importante (3 à 5 millimètre en général), avec un connecteur (référence 12) en bout de carte, enfichable dans un connecteur complémentaire d'un microordinateur.

L'invention s'intéresse aux cartes dont la fonction est de permettre la communication de données entre le microordinateur et l'extérieur. Cette carte comportera donc des circuits électroniques permettant d'effectuer cette communication et notamment un connecteur supplémentaire. Si la communication avec l'extérieur se fait par voie électromagnétique (fréquence radio en ondes métriques, ou hyperfréquences en ondes décimétriques à millimétriques), la carte ne comporte alors pas à proprement parler de connecteur supplémentaire, mais elle comporte une antenne d'émission/réception hertzienne pour remplir la fonction de ce connecteur.

Une carte de communication selon l'invention est représentée schématiquement à la figure 2. C'est une carte qui comporte des mémoires MNV, MV et un microprocesseur MP. Les mémoires sont de deux types, mémoires volatiles (RAM) et mémoires non volatiles (ROM ou EPROM ou EEPROM ou flash EPROM dans la technologie actuelle). Sur la figure on a représenté une seule mémoire non volatile MNV et une seule mémoire volatile MV, mais évidemment chacune de ces mémoires peut être réalisée avec plusieurs puces de circuit intégré si la capacité de mémoire requise est trop élevée pour une seule puce.

Le microprocesseur exécute des tâches sous la commande de programmes qui sont stockés dans sa propre mémoire de programme R(ROM). Ces programmes incluent des programmes permettant la communication de données entre la carte et l'extérieur par l'intermédiaire d'un connecteur CNX. Le microprocesseur est raccordé au connecteur CNX par l'intermédiaire d'un circuit d'interface IF1.

Selon une variante de réalisation, le microprocesseur pourrait avoir ses programmes de commandes enregistrés dans la mémoire non volatile MNV. Le microprocesseur serait alors relié à cette dernière par un bus d'adresses et de données de la même façon qu'avec la mémoire de programme R.

La mémoire volatile MV et la mémoire non volatile MNV peuvent communiquer directement avec le microordinateur PC par l'intermédiaire du connecteur CNC (correspondant au connecteur 12 de la figure 1), qui est enfiché dans le connecteur complémentaire CNP du microordinateur. Mais le microprocesseur MP ne peut pas communiquer directement avec le microordinateur.

Sur la figure 2, on a représenté schématiquement ces possibilités de communication : le microprocesseur interne est relié à la mémoire volatile par un bus d'adresses AD2, un bus de données BD2, et un bus de signaux de contrôle SC2. Les mémoires sont par ailleurs accessibles par l'ordinateur personnel PC, par un bus d'adresse, AD, un bus de données BD et un bus de signaux de contrôle, ces trois bus issus du connecteur CNC.

Selon l'invention, la carte se comporte comme une carte à mémoire vue du côté du microordinateur : elle contient des fichiers de mémoire, volatiles et non volatiles, et une structure d'organisation de ces fichiers, exactement comme si cette carte électronique n'était pas autre chose qu'une disquette magnétique souple ou un disque dur.

De plus, la fonction des mémoires MNV et MV est déterminée de la manière suivante : la mémoire non volatile contient non seulement des programmes exécutables par le microordinateur PC, mais elle contient aussi toutes les données d'organisation des mémoires de la carte, c'est-à-dire les données qui permettent au microordinateur PC d'en comprendre l'organisation (de même qu'une disquette magnétique contient, sur ses premières pistes, des données générales d'organisation des fichiers de la disquette).

En particulier, si on se réfère à l'organisation classique de fichiers de mémoire de masse dans les microordinateurs fonctionnant sous système DOS, les données d'organisation de la mémoire pourront comporter en général :
- éventuellement un fichier d'identification ID par lequel le microordinateur peut savoir à quel type de carte il est connecté;
- un fichier BOOT, dit fichier d'amorce
- un fichier FAT, dit table d'allocation de fichiers, qui définit le plan d'occupation de la mémoire par l'ensemble des fichiers, c'est-à-dire l'emplacement physique des différents fichiers,
- un fichier DIR qui est le répertoire racine contenant des renseignements sur les fichiers : les noms des fichiers (nom et extension), la taille du fichier, la date et l'heure de création ou modification du fichier, des attributs éventuels de fichier (fichier caché ou non, etc.),
- un fichier BIO qui est un fichier de système non accessible à l'utilisateur,
- et enfin, tous les fichiers utilisables, dont la plupart sont en mémoire non volatile et dont au moins un est en mémoire volatile. Parmi ces fichiers, il peut y avoir bien entendu un fichier de démarrage (AUTOEXEC.BAT) qui va aller chercher des fichiers exécutables permettant le lancement de l'application.

Par conséquent, selon l'invention, la carte contient toutes ces données d'organisation en mémoire non volatile MNV, et les programmes de fonctionnement directement exécutables par le microordinateur sont tous (ou dans certains cas presque tous) aussi en mémoire non volatile. Le nom, l'emplacement physique et d'autres attributs de chaque fichier programme sont donc en mémoire non volatile.

Enfin, il y a dans la mémoire non volatile les données d'organisation concernant un fichier d'interface FI; le nom de ce fichier est stocké dans le fichier non volatile DIR, l'adresse de son emplacement physique est définie dans le fichier non volatile FAT; l'emplacement physique de ce fichier d'interface est dans la mémoire volatile MV.

Ce fichier d'interface sert à stocker temporairement des données à transférer de l'ordinateur PC vers l'extérieur ou de l'extérieur vers l'ordinateur par l'intermédiaire de la carte, ou éventuellement des instructions de transfert de données (c'est-à-dire qu'au lieu de contenir des données 1 ou 0, le fichier peut recevoir des instructions telles que "transfert de 1 ", "transfert de 0", etc. interprétables par le microprocesseur interne).

La mémoire volatile MV est une mémoire à double accès : l'ordinateur PC peut y inscrire ou y lire des données ou des instructions interprétables par le microprocesseur interne, et le microprocesseur interne MP peut également y lire ou y inscrire des données ou instructions, sous la commande de programmes de lecture ou d'écriture contenus dans sa propre mémoire de programme R.

La mémoire non volatile peut ou non être à double accès selon les cas.

Le fonctionnement de la carte de communication est alors par exemple le suivant : l'ordinateur PC peut essayer d'écrire dans le fichier d'interface une donnée à transmettre à l'extérieur ou une instruction de transmission de donnée. Cette opération d'écriture peut être détectée par le microprocesseur interne MP. Ce dernier est activé par cette détection. Il prend alors la main pour exécuter son programme interne sous le contrôle de la mémoire non volatile. Ce programme est par exemple un programme de transmission vers l'extérieur (par le connecteur CNX) de la donnée reçue par le fichier d'interface. Le microprocesseur va donc lire les données écrites dans le fichier volatile de la mémoire MV, et il les transmet au connecteur CNX par l'intermédiaire du circuit d'interface. Lorsque la tâche est terminée, le microprocesseur rend la main au microordinateur. Inversement, s'il s'agit de recevoir des données et de les transmettre à l'ordinateur, le microprocesseur va exécuter un programme de transfert dans l'autre sens, il va écrire les données dans le fichier volatile de la mémoire d'interface et rendre la main à l'ordinateur pour que celui-ci puisse les lire.

La communication entre l'ordinateur PC et la carte est donc uniquement la communication standard d'une carte à mémoire, permettant d'aller lire ou écrire dans des fichiers choisis, en l'occurrence surtout dans le fichier d'interface FI.

Il n'est pas nécessaire de prévoir dans le protocole de communication entre l'ordinateur et la carte d'autres signaux que les signaux d'échange avec une simple carte à mémoire : bus d'adresse, de données, signal de lecture/écriture, signal de sélection d'unité, etc. On peut donc dès lors utiliser le connecteur d'extension de mémoire de l'ordinateur PC, même pour y mettre une carte de communication (modem, fax, etc.).

Cette carte de communication comporte à la fois de la mémoire non volatile et de la mémoire volatile, comme beaucoup de cartes à mémoires, mais contrairement à ces dernières, elle ne nécessite pas de pile ou batterie pour sauvegarder le contenu de la mémoire volatile. En effet celle-ci ne contient pas de données qui nécessitent d'être conservées après utilisation. Elle ne contient en principe que les données ou instructions transmises au fur et à mesure entre l'ordinateur et l'extérieur.

Une application particulière de la présente invention en dehors de la communication avec une ligne téléphonique est la suivante : la carte de communication est un lecteur de cartes de crédit à contacts affleurants, c'est-à-dire que la carte comporte non seulement un connecteur enfichable dans un connecteur correspondant de l'ordinateur, mais elle comporte aussi un connecteur à six ou huit contacts pouvant recevoir une carte à puce plate au format carte de crédit à six ou huit contacts affleurants. Par le système selon l'invention, on peut par exemple lire le contenu de la carte à contacts affleurants, ou faire exécuter par le microordinateur des programmes contenus dans cette carte, ou encore écrire dans la carte à contacts affleurants, etc.

Par exemple, le fonctionnement peut être le suivant: l'ordinateur écrit dans le fichier d'interface une instruction à destination du microprocesseur interne; cette instruction peut être : "lecture de quatre octets de la mémoire de la carte à contacts affleurants". Le microprocesseur, "réveillé" par cette écriture, va interpréter l'instruction. Les octets lus sont transférés dans un fichier de la mémoire volatile et peuvent être lues par l'ordinateur.

Les données ainsi récupérées de l'extérieur par le connecteur CNX peuvent ainsi être placées soit dans le même fichier d'interface FI que les données ou instructions émises à partir de l'ordinateur PC, soit dans un autre fichier, également dans la mémoire volatile MV. Cet autre fichier a également ses paramètres d'organisation (nom, extension, emplacement, etc.) placées en mémoire non volatile MNV.

Dans un exemple particulier de réalisation, la mémoire volatile MV comporte un premier fichier destiné à recevoir des instructions interprétables par le microprocesseur interne, et un deuxième fichier destiné à contenir des données à échanger entre le microordinateur PC et l'extérieur.

## Revendications

1. Carte de communication, destinée à être enfichée dans un ordinateur, ladite carte comportant:
- un microprocesseur interne (MP);
- un connecteur (CNC) permettant l'enfichage de la carte dans l'ordinateur;
- des mémoires non volatiles (MNV)contenant des programmes de travail exécutables par l'ordinateur et des données de format concernant la structure d'organisation des fichiers de mémoire de la carte;
- une mémoire volatile (MV) reliée au microprocesseur interne par un bus d'adresse (AD2) de données (BD2) et de signaux de contrôle (SC2) cette mémoire comportant un emplacement physique réservé au stockage temporaire des données à transférer de l'ordinateur vers l'extérieur ou de l'extérieur vers l'ordinateur, l'adresse de cet emplacement physique et le nom du fichier pour cet emplacement physique étant mémorisé dan la mémoire non volatile;
- ces mémoires étant directement accessibles par l'ordinateur personnel au moyen d'un bus d'adresse (AD), de données (BD) et de signaux de contrôle (SC) ces trois bus étant issus du ledit connecteur (CNC).
- un circuit d'interface supplémentaire (IF1) permettant une communication entre la carte et l'extérieur.

2. Carte de communication selon la revendication 1 **caractérisée en ce qu'**elle comprend un connecteur supplémentaire (CNX) qui est un connecteur de liaison avec une carte à puce à contacts affleurants, et **en ce que** les programmes en mémoire non volatile comportent des programmes de lecture et/ou d'écriture de données dans la carte à puce.

## Patentansprüche

1. Zum Einstecken in einen Computer bestimmte Kommunikationskarte, wobei die genannte Karte umfasst:
- einen internen Mikroprozessor (MP) :
- einen das Einstecken der Karte in den Computer erlaubender Verbinder (CNC)
- durch den Computer ausführbare Arbeitsspeicher und die Organisationsstruktur der Speicherregister der Karte betreffende Formatdaten enthaltende nicht flüchtige Speicher (MNV) ;
- einen mit dem internen Mikroprozessor durch einen Adressbus (AD2), Datenbus (BD2) und Kontrollsignalbus (SC2) verbundenen flüchtigen Speicher (MV), wobei dieser Speicher einen der Zwischenspeicherung vom Computer an die Außenwelt oder von der Außenwelt auf den Computer zu übertragenden Daten reservierten physischen Platz umfasst, wobei die Adresse dieses physischen Platzes und der Name der Datei für diesen physischen Platz im nicht flüchtigen Speicher gespeichert wird;
- wobei diese Speicher direkt durch den Personalcomputer mittels eines Adressbusses (AD), Datenbusses (BD) und Signalkontrollbusses (SC) zugänglich sind, wobei diese drei Busse aus dem genannten Verbinder (CNC) stammen;
- wobei ein zusätzlicher Schnittstellenschaltkreis (IF1) eine Kommunikation zwischen der Karte und der Außenwelt erlaubt.

2. Kommunikationskarte gemäß Anspruch 1, **dadurch gekennzeichnet, dass** sie einen zusätzlichen Verbinder umfasst, der ein Verbinder zur Verbindung mit einer Chipkarte mit versenkten Kontakten ist, und dass die Programme im nicht flüchtigen Speicher Leseprogramme und / oder Datenschreibprogramme in der Chipkarte umfassen.

## Claims

1. A communication card intended to be plugged into a computer, the said card comprising:
- an internal microprocessor (MP);
- a connector (CNC) enabling the card to be plugged into the computer;
- non-volatile memories (MNV) containing work programs executable by the computer and format data concerning the organisation structure of the card memory files;
- a volatile memory (MV) connected to the internal microprocessor by an address (AD2), data (BD2) and control signal (SC2) bus, this memory comprising a physical location reserved for the temporary storage of the data to be transferred from the computer to the outside or from the outside to the computer, the address of this physical location and the name of the file for this physical location being stored in the non-volatile memory: these memories being accessible to the personal computer by means of an address (AD), data (BD) and control signal (SC) bus, these three buses issuing from the said connector (CNC);
- a supplementary interface circuit (IF1) allowing communication between the card and the outside.

2. A communication card according to Claim 1, **characterised in that** it comprises a supplementary connector (CNX) which is a connector for connection with a flush-contact chip card, and **in that** the programs in non-volatile memory comprise programs for reading and/or writing data in the chip card.
